# FASCICULE DE BREVET EUROPEEN

(11) **EP 1 195 020 B1**
(45) Date de publication et mention de la délivrance du brevet: **12.09.2007**
(21) Numéro de dépôt: 00953261.5
(22) Date de dépôt: 19.07.2000
(51) Int. Cl.: H04L 9/32, G07F 7/10

(54) **PROCEDE DE REALISATION D'UNE TRANSACTION ELECTRONIQUE UTILISANT PLUSIEURS SIGNATURES**
VERFAHREN ZUR AUSFÜHRUNG EINER ELEKTRONISCHEN TRANSAKTION UNTER VERWENDUNG MEHRERER UNTERSCHRIFTEN
METHOD FOR CARRYING OUT AN ELECTRONIC TRANSACTION USING SEVERAL SIGNATURES

(30) Priorité: 20.07.1999 FR 9909396
(43) Date de publication de la demande: 10.04.2002
(73) Titulaire: FRANCE TELECOM, 75015 Paris (FR); LA POSTE, 92777 Boulogne Billancourt Cédex (FR)
(72) Inventeur: REMERY, Patrick, F-14000 Caen (FR); De SOLAGES, Aymeric, F-14000 Caen (FR); TRAORE, Jacques, F-61100 Flers (FR)
(74) Mandataire: Poulin, Gérard
(86) Numéro de dépôt international: PCT/FR2000/002075
(87) Numéro de publication internationale: WO 2001/006702

(56) Documents cités:
- EP-A- 0 588 339
- WO-A-97/42610

## Description

### Domaine technique

La présente invention a pour objet un procédé de réalisation d'une transaction électronique utilisant plusieurs signatures.

Elle trouve une application dans toutes les transactions (téléachat, télépaiement, accès à un service, etc...) s'effectuant à l'aide de moyens électroniques, comme les cartes à puces par exemple. L'invention trouve une application particulière dans le porte-monnaie électronique.

### Etat de la technique antérieure

La sécurité des transactions électroniques par carte à puce repose sur des techniques cryptographiques. Le processeur de la puce calcule et émet une signature numérique de la transaction qui constitue une preuve de l'accord de la partie émettrice de la signature sur cette transaction. Cette preuve est spécifique à l'organisme émetteur gestionnaire de l'application. Cette signature numérique est le résultat d'un calcul portant sur les données identifiant l'émetteur de la carte, le terminal, le numéro de la transaction, le montant de la transaction et éventuellement le numéro de compte du porteur.

Les données sont transmises à l'émetteur de la carte qui effectue les traitements appropriés tels que l'audit de la transaction par vérification de la signature, mise en recouvrement, débit du compte client, crédit du compte du fournisseur de services, etc...

Dans une des techniques antérieures décrites dans FR-A-2 748 591, la carte produit deux signatures, la première dite "longue" (algorithme à clé publique) et destinée au fournisseur de services, et la seconde, dite "courte" (algorithme à clé secrète) encapsulée dans la première est destinée à l'émetteur. Le prestataire de services vérifie la signature longue, et si le résultat est correct, rend le service commandé et stocke la signature courte. Il transmet à l'émetteur, en fin de journée, les signatures courtes stockées et les données correspondantes.

Ce schéma, s'il a l'avantage d'être simple, pose cependant quelques problèmes lorsque les paiements sont réalisés au moyen d'un porte-monnaie électronique (PME en abrégé). Il est, en effet, parfois nécessaire d'introduire un ou plusieurs acteurs intermédiaires entre les trois parties déjà citées à savoir le porteur, le prestataire de services et l'émetteur, selon les besoins de concentration effectuant des cumuls de valeur électronique.

Une solution consiste à ajouter des moyens intermédiaires appelés SAM ("Secure Application Modules) vérifiant l'une des deux signatures produites par la carte et cumulant la valeur électronique reçue.

Si les SAM intermédiaires étaient capables d'effectuer la même vérification que celle faite par l'émetteur, la sécurité serait dégradée. En effet, si l'algorithme cryptographique utilisé pour produire la signature destinée à l'émetteur de la carte était à clé secrète, la clé de l'émetteur serait placée à des niveaux de responsabilité inférieurs vis-à-vis de la garantie de la monnaie électrique.

Si la deuxième signature destinée au fournisseur de services était produite par un algorithme à clé publique, alors les SAM intermédiaires seraient, tout comme le fournisseur de services, en mesure d'authentifier n'importe qu'elle transaction émanant d'un PME. Toutefois, dans ce cas de figure, les signatures seraient de taille nettement plus longues et donc plus coûteuses à transférer, à stocker et à vérifier.

La présente invention a justement pour but de remédier à ces inconvénients.

### Exposé de l'invention

A cette fin, l'invention propose un procédé utilisant plusieurs signatures, avec une chaîne d'encapsulations-décapsulations. On suppose qu'on est en présence d'un réseau de communications (par exemple un réseau téléphonique) reliant des entités susceptibles de communiquer entre elles, avec la contrainte qu'il n'existe pas de canal de communication directe entre deux entités souhaitant communiquer et que les canaux de communication existants peuvent être unidirectionnels.

Une transaction fait intervenir un sous-ensemble d'entités appelées aussi "acteurs", concourant à des titres divers à la réalisation de la transaction. En pratique, ces entités ou acteurs sont constituées par des moyens physiques : terminal, carte, microprocesseur, etc...

Au cours de la transaction :
■ une entité i dispose des moyens nécessaires (Eᵢⱼ) au calcul des cryptogrammes destinés à une entité j, et/ou à la vérification de cryptogrammes en provenance de j,
■ et une entité j dispose également des moyens (Eⱼᵢ) corresponants,
ces moyens Eᵢⱼ et Eⱼᵢ ayant été obtenus au cours de la phase dite d'initialisation (effectuée préalablement et/ou parallèlement à la transaction elle-même). On dira alors que ces deux entités partagent un système de clés noté Kᵢⱼ=Kⱼᵢ={(i,Eᵢⱼ), (j,Eⱼᵢ)}. Par exemple :
■ dans le cas d'un système à clés secrètes, on a : Eᵢⱼ=Eⱼᵢ=Sᵢⱼ ;
■ dans le cas d'un système à clés publiques, on a :
   - pour une communication monodirectionnelle Eᵢⱼ=(Sᵢ, Pᵢ), et Eⱼ=(Pᵢ),
   - pour une communication bidirectionnelle Eᵢⱼ=(Sᵢ,Pᵢ, Pⱼ), et Eⱼᵢ=(Sⱼ,P_{i,}Pⱼ).

Avec cette définition, le système de clés est une notion symétrique par rapport à i et j. En revanche, si l'on note Kᵢⱼ(m) le cryptogramme d'un message m envoyé par i à j, on a Kᵢⱼ(m)≠Kⱼᵢ(m).

Dans ces conditions et sous ces hypothèses, une entité source de message "encapsule" (c'est-à-dire renferme) un message dans une suite de cryptogrammes portant sur des cryptogrammes, eux-mêmes portant sur des cryptogrammes, etc... Tous ces cryptogrammes sont calculés à l'aide de systèmes de clés que l'entité source partage respectivement avec chacune des entités intermédiaires situées sur le chemin de la communication. Le cryptogramme global est émis et chaque entité intermédiaire "décapsule" (c'est-à-dire extrait) le cryptogramme qu'elle reçoit avec le système de clés qu'elle partage avec l'entité source, et transmet le cryptogramme restant à l'entité suivante. De proche en proche, le premier cryptogramme calculé parvient à l'entité destinataire qui extrait le message qui lui est destiné à l'aide du système de clés approprié.

Selon les besoins de la transaction et les protocoles utilisés, les cryptogrammes calculés peuvent servir à l'authentification des acteurs, à l'authentification de l'origine des messages, ou à la non-répudiation (à l'émission ou à la réception) de ces messages.

Ce procédé suppose l'existence d'un système de gestion des systèmes de clés (qui englobe la génération, la distribution et/ou l'échange de clés nécessaires à l'établissement de communications sûres avec les autres acteurs), mis en oeuvre au cours d'une phase dite d'initialisation. Ce système de gestion de clés peut être quelconque et par exemple consister en une infrastructure à clé publique, avec un protocole de transport de clés associé.

Parmi les entités en présence, certaines peuvent jouer le rôle de tiers de confiance. Par exemple :
■ dans le cas d'un système à clé publique, il peut s'agir d'une autorité de certification,
■ dans le cas d'un système à clé secrète, il peut s'agir d'une entité maître, partageant une clé secrète avec chacune des autres entités, ou certaines d'entre elles seulement.

Une entité peut participer à une transaction à divers titres comme par exemple :
1.assurer un relais de l'information : une entité joue le rôle de relais intermédiaire et pallie ainsi l'absence de canal de communication reliant directement un expéditeur et un destinataire d'un message nécessaire à la transaction ;
2.assurer une désynchronisation : une entité joue le rôle de cache intermédiaire de messages pour le compte d'une autre entité, destinataire réel de ces messages ; cette entité intermédiaire :
   - pallie l'indisponibilité temporaire du destinataire,
   - est conçue pour être sollicitée plus fréquemment que le destinataire et joue le rôle d'interface regroupant les messages et évitant la sollicitation systématique du destinataire.

L'émetteur et/ou le destinataire ont intérêt à l'arrivée des informations à destination. Les acteurs intermédiaires doivent donc être des relais sûrs de cette information. Plusieurs cas sont notamment possibles :
- les acteurs intermédiaires ont également intérêt à l'arrivée des informations à destination. C'est le cas par exemple lorsqu'il s'agit d'un commerçant dans une transaction financière faisant intervenir un client (acteur expéditeur) et le système de gestion du moyen de paiement (acteur destinataire),
- l'expéditeur et/ou le destinataire font confiance aux acteurs intermédiaires pour l'opération de relayage (mais pas nécessairement pour l'authenticité de l'origine des informations),
- les acteurs expéditeurs et destinataire font totalement confiance aux acteurs intermédiaires (tiers de confiance),
- les acteurs expéditeur et destinataire ne font pas du tout confiance aux acteurs intermédiaires, et des moyens de non-répudiation à l'émission et à la réception sont mis en place.

De façon précise, l'invention a pour objet un procédé de réalisation d'une transaction électronique à travers un réseau de communication reliant une pluralité d'entités, ce procédé étant caractérisé en ce qu'il comprend les opérations suivantes :
a)une première entité élabore un premier message rassemblant les données de la transaction et calcule un premier cryptogramme de ce premier message en utilisant un premier système de clés qu'elle partage avec une dernière (n^{ième}) entité ; la première entité associe ensuite à ce premier cryptogramme un deuxième message et calcule un deuxième cryptogramme de l'ensemble en utilisant un deuxième système de clés qu'elle partage avec l'avant-dernière (n-1)^{ième} entité ; et ainsi de suite ; la première entité associe au (n-2)^{ième} cryptogramme précédemment obtenu un (n-1)^{ième} message et calcule un (n-1)^{ième} cryptogramme de l'ensemble en utilisant un (n-1)^{ième} système de clés qu'elle partage avec la deuxième entité ; la première entité transmet le dernier cryptogramme calculé à travers le réseau de communication ;
b)la deuxième entité reçoit ce dernier cryptogramme, utilise le système de clés approprié pour extraire du (n-1)^{ième} cryptogramme le (n-1)^{ième} message qu'il contient, et transmet le (n-2)^{ième} cryptogramme restant à la troisième entité ; et ainsi de suite ; la n^{ième} entité reçoit le premier cryptogramme et utilise le système de clés approprié pour extraire le premier message qu'il contient.

Dans cette définition, la "première entité" n'est pas nécessairement l'entité source du message mais elle peut l'être. De même, la "dernière entité" n'est pas nécessairement l'entité destinataire in fine du message mais elle peut l'être. Ainsi, dans le cas particulier précédent, le réseau de communication comprend uniquement des entités partageant un système de clés avec une première entité, la transaction s'effectuant alors entre la première entité, qui est la source du message et la dernière, qui est le destinataire du message.

L'encapsulation est alors totale à la source et la décapsulation progressive jusqu'au destinataire.

Dans une variante de mise en oeuvre, l'encapsulation est partagée (ou répartie). Dans ce cas, le réseau de communication comprend un premier groupe d'entités constitué d'une première entité et de (i-1) autres partageant chacune un système de clés avec ladite première entité, et un deuxième groupe d'entités constitué d'une première entité qui est la dernière entité du premier groupe à savoir l'entité i, et de (n-i) autres. L'entité i partage un système de clés avec chacune de ses (n-i) entités suivantes. Ce procédé comprend deux phases successives :
- une première phase dans laquelle le message élaboré par la première entité du premier groupe est transmis à la i^{ème} entité du premier groupe conformément aux opérations a) et b) définies plus haut,
- une seconde phase dans laquelle le message extrait par la première entité du second groupe est transmis à la dernière entité du second groupe conformément auxdites opérations a) et b).

Dans un cas général, on peut combiner les modes de mise en oeuvre qui viennent d'être définis. Ainsi, le réseau de communications peut comprendre un premier groupe d'entités constitué d'une première entité et de (i-1) autres partageant un système de clés avec ladite première entité, un deuxième groupe d' entités constitué d'une première entité, qui est la dernière entité du premier groupe et (j-i+1) autres partageant un système de clés avec ladite première entité du deuxième groupe, un troisième groupe d'entités constitué d'une première entité qui est la dernière entité du deuxième groupe et de (n-j) autres, les (n-j+1) entités de ce troisième groupe partageant un système de clés avec la première entité du premier groupe, ce procédé étant caractérisé en ce que :
- la première entité du premier groupe effectue les opérations a) définies plus haut, avec les systèmes de clés qu'elle a en commun avec chacune des autres entités du premier et du troisième groupe,
- les entités du premier groupe traitent les cryptogrammes qu'elles reçoivent conformément aux opérations b) définies plus haut,
- la première entité du deuxième groupe effectue les opérations a) avec les systèmes de clés qu'elle a en commun avec chacune des autres entités du deuxième groupe,
- les entités du deuxième groupe traitent les cryptogrammes qu'elles reçoivent conformément aux opérations b) définies plus haut,
- les entités du troisième groupe traitent les cryptogrammes qu'elles reçoivent conformément aux opérations b).

La présente invention a également pour objet une application de ce procédé au paiement par porte-monnaie électronique.

### Description détaillée de modes de mise en oeuvre

L'authenticité des données est obtenue par des techniques mettant en oeuvre des mécanismes de chiffrement, d'authentification ou de signature.

Le terme "signature" utilisé dans la suite désigne des cryptogrammes obtenus aussi bien au moyen de mécanismes de signature basés sur des algorithmes à clé publique (avec recouvrement ou non du message) que ceux basés sur des algorithmes à clé secrète ("MAC", ou "Message Authentification Code" en anglais).

Les notations utilisées dans la suite sont les suivantes :
- mᵢⱼ : message déterminé par l'entité i et destiné à l'entité j. Un message déterminé par une entité i pourra très bien être vide ou identique à un message déterminé par une autre entité j (m_{i,l}=m_{j,l} pour i≠j et l donné), ou encore un cryptogramme. Dans le cas du paiement par carte PME (Porte-Monaie Electronique), m_{i,j} désignera par exemple les données de la transaction (y compris les éléments anti-rejeux).
- K_{i,j}(m) : cryptogramme du message m, calculé par i à l'aide du système de clés Kᵢⱼ. L'algorithme de calcul de ce cryptogramme dépend de l'application. Il n'est fait aucune restriction sur l'algorithme utilisé pour le calcul de ce cryptogramme. Il pourra s'agir par exemple :
   1. d'un algorithme à clé publique (RSA, DSA, etc...) ou d'un algorithme à clé secrète (MAC-DES, etc...),
   2. d'un algorithme de signature, ou d'un algorithme de chiffrement. Dans le cas d'une signature, on suppose implicitement que le cryptogramme utilisé permet le recouvrement d'un message. Cette hypothèse n'est pas restrictive car on peut toujours remplacer Kᵢⱼ(m) par K'ᵢⱼ(m) =Kᵢⱼ(m)∥m, où ∥ désigne la concaténation de messages.
- La notation Kᵢⱼ(X,m) est considérée comme équivalente à Kᵢⱼ(X∥m), dans l'hypothèse où les deux parties en présence ont convenu de la longueur de X.
- Dans la suite, le message X sera lui-même un cryptogramme K(m'). On appellera "encapsulation" le fait d'utiliser ainsi un cryptogramme X=K'(m) comme message.
- Lorsque le cryptogramme Kᵢⱼ(X,m) est destiné à préserver l'intégrité du message, mais que les canaux qu'il doit emprunter sont contrôlés par des entités qui ont intérêt au transfert de X, on pourra avoir par exemple Kᵢⱼ(K(m'),m)=K(m') ∥K'ᵢⱼ(m), aucune restriction n'étant faite sur l'algorithme de calcul des cryptogrammes.

Quatre exemples de mise en oeuvre de ce procédé vont être décrits

### Exemple 1 : Encapsulation totale à la source et décapsulation progressive

La source élabore un message m_{1,n} rassemblant les données de la transaction et calcule un premier cryptogramme K_{1,n}(m_{1,n}) de ce premier message en utilisant un premier système de clés K_{1,n} qu'elle partage avec la dernière n^{ième} entité ; la source associe ensuite à ce premier cryptogramme un deuxième message m_{1,n-1} et calcule un deuxième cryptogramme K_{1,n-1}(K_{1,n}(m_{1,n}),m_{1,n-1}) de l'ensemble en utilisant un deuxième système de clés K_{i,n-1} qu'elle partage avec une avant-dernière (n-1)^{ième} entité, et ainsi de suite, ... ; la première entité associe au (n-2)^{ième} cryptogramme précédemment obtenu un (n-1)^{ième} message m_{1,2} et calcule un (n-1)^{ième} cryptogramme de l'ensemble en utilisant un (n-1)^{ième} système de clés K_{1,2} qu'elle partage avec une deuxième entité, et la source transmet le dernier cryptogramme calculé à travers le réseau de communication vers l'entité 2.

On peut schématiser cette première phase par le diagramme suivant où la flèche orientée à droite symbolise le transfert d'information entre l'entité 1 (à gauche) et l'entité 2 (à droite) :

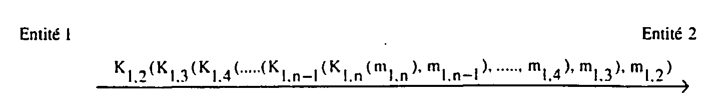

L'entité 2, qui reçoit le message de l'entité 1, réalise une décapsulation partielle de ce message à l'aide du système de clés K_{1,2} ; elle vérifie (et conserve éventuellement) le cryptogramme qui lui est destiné (en l'occurrence la signature du message m_{1,2}), puis transmet à l'entité 3 le reste du message. On a donc, avec les mêmes conventions, le schéma suivant :

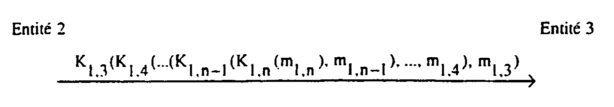

Ce procédé est réitéré de proche en proche jusqu'à l'entité n. Pour les entités i et i+1 intermédiaires, on a :

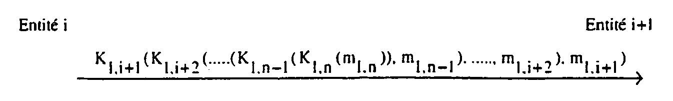

Enfin, l'avant-dernière entité (n-1) transmet au destinataire (n) le dernier cryptogramme K_{1,n}(m_{1,n}) et celui-ci, à l'aide du système de clés K_{1,n}, récupère le message qui lui était destiné :

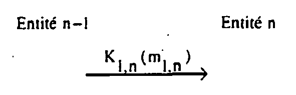

### Exemple 2 : Encapsulation partagée

L'entité 1 partage un système de clés avec seulement une partie des entités se trouvant sur le chemin de communication, à savoir les entités 2, ..., i qui forment un premier groupe. L'entité i, quant à elle, partage un système de clés avec chacune des entités suivantes : i+1, i+2, ..., n et forme avec elles un second groupe.

L'entité 1 élabore un message pour la dernière entité i du premier groupe, soit m_{1,i} et encapsule ce message avec les systèmes de clés qu'elle partage avec chacune des entités du premier groupe, et transmet le tout à l'entité 2 :

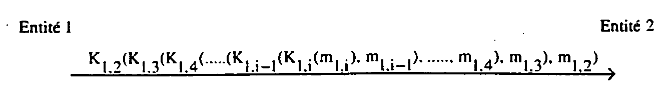

Dans ce premier groupe, les entités décapsulent progressivement les cryptogrammes jusqu'à ce que l'avant-dernière entité i-1 transmette à la dernière entité i, le cryptogramme du message qui lui est destiné :

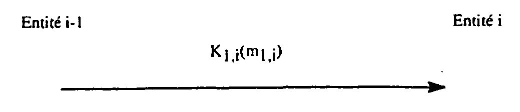

L'entité i procède alors à une encapsulation de la totalité des messages m_{i,i+1}, m_{i,i+2}, ..., m_{i,n} destinés aux entités du second groupe. Le contenu de ces messages peut dépendre du cryptogramme reçu. Le résultat de cette encapsulation est ensuite transmis selon le procédé déjà décrit, d'abord de l'entité i à l'entité i+1 : 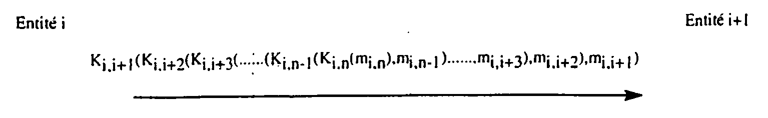 et ainsi de suite à travers les entités du second groupe jusqu'à l'avant dernière, n-1, qui transmet le dernier cryptogramme au destinataire n.

### Exemple 3 : Cas général

L'entité 1 partage un système de clés avec une partie des entités se trouvant sur le chemin de communication, partie que pour la simplicité de l'exposé, on supposera être 2, ..., i, j+1, ..., n. L'entité 1 réalise donc une encapsulation partielle comme le montre le schéma suivant :

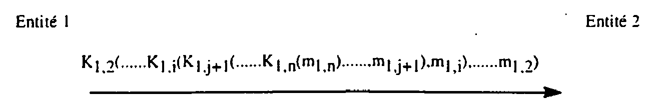

Chaque entité intermédiaire décapsule le message qu'elle reçoit à l'aide du système de clés approprié, et ceci jusqu'à l'entité i :

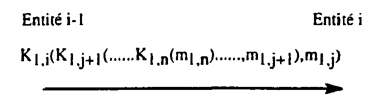

Tout acteur (ici "i" uniquement), qui, après avoir extrait le message qui lui était destiné, obtient un reste de message destiné à un acteur non adjacent sur le parcours, le réencapsule à destination de l'entité adjacente et (éventuellement) des suivantes.

Dans cet exemple, l'entité i partage un système de clés avec chacune des entités suivantes : i+1, i+2, ..., j. L'entité i reçoit le message de i-1, réalise une décapsulation partielle, puis réencapsule le message obtenu à destination de i+1, i+2, ..., j.

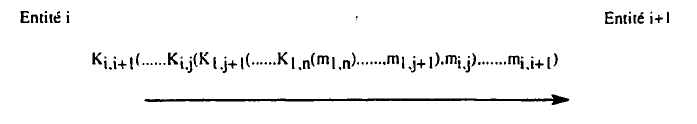

Chaque entité intermédiaire décapsule le message qu'elle reçoit à l'aide du système de clés et ceci jusqu'à l'entité j :

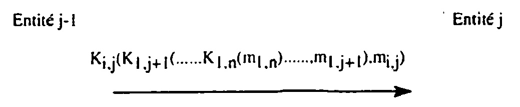

L'entité j décapsule à nouveau. Le message décapsulé est ensuite transmis de proche en proche de j+1 à n :

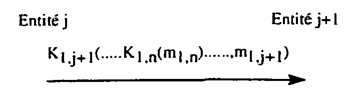

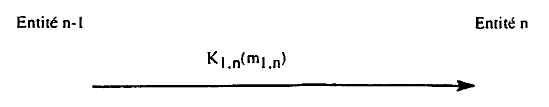

On peut illustrer, dans le cadre de cet exemple, le cas particulier décrit précédemment dans lequel certains cryptogrammes K_{i,j}(...) sont de la forme K_{i,j}(X,m) =X, K_{i,j}(m). L'entité i n'encapsule pas les messages à destination de i+1, i+2, ..., j, parce que les canaux sont considérés comme sûrs et les entités impliquées n'ont pas intérêt à falsifier les messages.

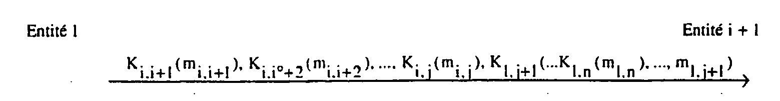

Chaque entité intermédiaire reçoit et contrôle le message qui lui est destiné à l'aide de son système de clés, ceci jusqu'à l'entité j.

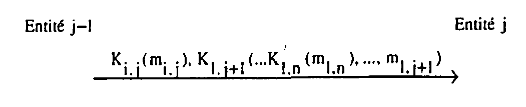

L'entité j reçoit et contrôle le message qui lui est destiné. Le message est ensuite transmis de proche en proche de j+1 à n :

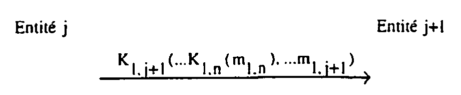

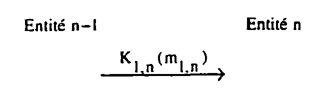

### Exemple 4 : cas du porte-monnaie électronique (PME)

Dans cet exemple, les entités (ou les acteurs) sont :
- des cartes PME notées A,
- des points de service P, aptes à recevoir les cartes,
- des concentrateurs de points de service et leur module de sécurité MS,
- un émetteur E chargé d'émettre les cartes PME et chargé d'acquérir la monnaie électronique.

Le réseau de communication relie les points de service aux concentrateurs et ces concentrateurs à l'émetteur.

Par hypothèse :
- A et MS partagent un système de clés K_{A,M},
- A et E partagent un système de clés K_{A,E},
- A et P partagent un système de clés K_{A,P}.

Les notations employées sont les suivantes :
- K(m) cryptogramme du message m obtenu en utilisant le système de clés K,
- NT_{A} : numéro de transaction du PME A,
- NT_{MS} : numéro de transaction de MS,
- ID_{PME} : identifiant du PME,
- ID_{MS} : identifiant de MS.

Après l'étape préalable d'échange de clés, A, P et MS échangent des informations relatives au numéro de la transaction NT_{A} et à l'identifiant du PME :

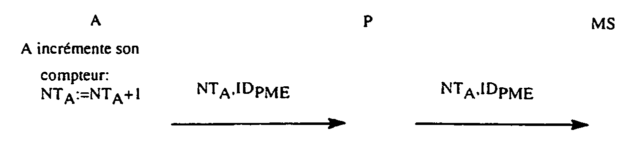

Puis le module de sécurité communique à l'entité P son numéro de transaction NT_{MS}, après l'avoir incrémenté, ainsi que son identité ; l'identité P retransmet ces informations à l'entité A.

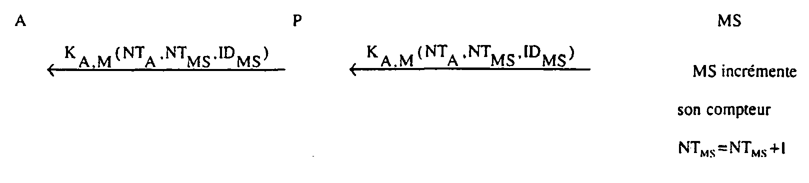

La carte A vérifie les données qu'elle a reçues et initialise à zéro le cumul (cumul=0).

Commence alors le cycle de consommation d'unités de service. Les opérations mises en oeuvre sont alors les suivantes :

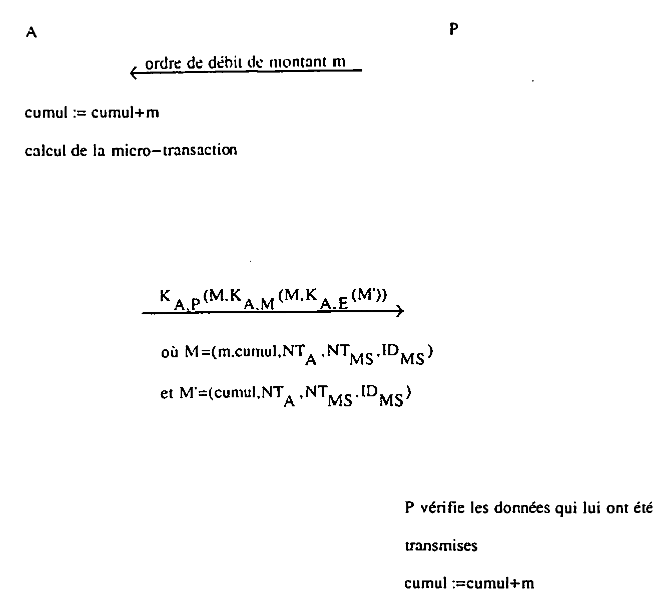

C'est ensuite le retour au début du cycle si l'utilisation du service n'est pas terminée. En fin de session de service, on a l'ultime échange suivant :

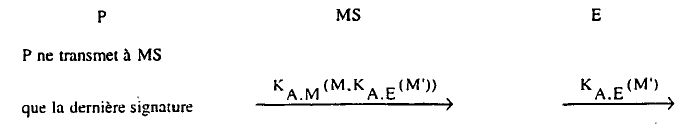

## Revendications

1. Procédé de réalisation d'une transaction électronique à travers un réseau de communication reliant une pluralité d'entités, **caractérisé en ce qu'**il comprend les opérations suivantes :
a)une première entité élabore un premier message rassemblant les données de la transaction et calcule un premier cryptogramme de ce premier message en utilisant un premier système de clés qu'elle partage avec une dernière (n^{ième}) entité ; la première entité associe ensuite à ce premier cryptogramme un deuxième message et calcule un deuxième cryptogramme de l'ensemble en utilisant un deuxième système de clés qu'elle partage avec une avant-dernière (n-1)^{ième} entité ; et ainsi de suite ; la première entité associe au (n-2)^{ième} cryptogramme précédemment obtenu un (n-1)^{ième} message et calcule un (n-1)^{ième} cryptogramme de l'ensemble en utilisant un (n-1)^{ième} système de clés qu'elle partage avec une deuxième entité ; la première entité transmet le dernier cryptogramme calculé à travers le réseau de communication,
b)la deuxième entité reçoit ce dernier cryptogramme, utilise le système de clés approprié pour extraire du (n-1)^{ième} cryptogramme le (n-1)^{ième} message qu'il contient, et transmet le (n-2)^{ième} cryptogramme restant à la troisième entité ; et ainsi de suite ; la n^{ième} entité reçoit le premier cryptogramme et utilise le système de clés approprié pour extraire le premier message qu'il contient.

2. Procédé selon la revendication 1, dans lequel le réseau de communication comprend uniquement des entités partageant une clé avec une première entité, la transaction s'effectuant alors entre la première entité, qui est la source du message et la dernière, qui est le destinataire du message.

3. Procédé selon la revendication 1, dans lequel le réseau de communication comprend un premier groupe d'entités constitué d'une première entité et de (i-1) autres partageant chacune un système de clés avec ladite première entité, et un deuxième groupe d'entités constitué d'une première entité qui est la dernière entité du premier groupe à savoir l'entité i et de (n-i) autres, l'entité i partageant un système de clés avec chacune des (n-i) entités suivantes, ce procédé comprenant deux phases successives :
- une première phase dans laquelle le message élaboré par la première entité du premier groupe est transmis à la i^{ème} entité du premier groupe conformément aux opérations a) et b) de la revendication 1,
- une seconde phase dans laquelle le message extrait par la première entité du second groupe est transmis à la dernière entité du second groupe conformément aux opérations a) et b) de la revendication 1.

4. Procédé selon la revendication 1, dans lequel le réseau de communication comprend un premier groupe d'entités constitué d'une première entité et de (i-1) autres partageant chacune un système de clés avec ladite première entité, un deuxième groupe d'entités constitué d'une première entité, qui est la dernière entité du premier groupe et (j-i+1) autres partageant chacune un système de clés avec ladite première entité du deuxième groupe, un troisième groupe d'entités constitué d'une première entité qui est la dernière entité du deuxième groupe et de (n-j) autres, les (n-j+1) entités de ce troisième groupe partageant chacune un système de clés avec la première entité du premier groupe, ce procédé étant **caractérisé en ce que** :
- la première entité du premier groupe effectue les opérations a) de la revendication 1, avec les systèmes de clés qu'elle a en commun avec chacune des autres entités du premier et du troisième groupe,
- les entités du premier groupe traitent les cryptogrammes qu'elles reçoivent conformément aux opérations b) de la revendication 1,
- la première entité du deuxième groupe effectue les opération a) de la revendication 1 avec les systèmes de clés qu'elle a en commun avec chacune des autres entités du deuxième groupe,
- les entités du deuxième groupe traitent les cryptogrammes qu'elles reçoivent conformément aux opérations b) de la revendication 1,
- les entités du troisième groupe décryptent les cryptogrammes qu'elles reçoivent conformément aux opérations b) de la revendication 1.

5. Procédé selon la revendication 1 dans lequel, la première entité i d'un groupe calcule un cryptogramme des messages destinés aux autres entités i+1, i+2, ..., j du groupe, sans les encapsuler, chaque entité i+1, i+2, ..., j reçoit et contrôle le message qui lui est destiné à l'aide de son système de clé partagé avec i.

6. Procédé selon la revendication 1, dans lequel la transaction électronique est un paiement, les entités étant constituées par des cartes (A), des points de service (P) aptes à recevoir lesdites cartes (A), des concentrateurs de points de service équipés d'un module de sécurité (MS) et reliés aux points de service et un émetteur (E) chargé d'émettre des cartes de type paiement électronique et chargé d'acquérir la monnaie électronique, le réseau de communication reliant des points de service (P) aux concentrateurs et ces concentrateurs à l'émetteur, chaque carte (A) partageant avec un module de sécurité (MS) un système de clés K_{A,M}, chaque carte A partageant également avec l'émetteur (E) un système de clés K_{A,E}, chaque carte (A) partageant avec un point de service (P) un système de clés K_{A,P}.

7. Procédé selon la revendication 6, dans lequel :
a) la carte (A) :
- calcule un message (M') à destination de l'émetteur (E), ce message comprenant le cumul des montants payés, le numéro (NT_{A}) de la transaction, le numéro de transaction (NT_{MS}) du module de sécurité (MS) auquel le point de service est relié, et l'identifiant (ID_{MS}) de ce module de sécurité,
- calcule un premier cryptogramme K_{A,E}(M') de ce message en utilisant le système de clés K_{A,E} qu'elle partage avec l'émetteur,
- ajoute à ce premier cryptogramme un message (M) contenant le montant de la transaction (m), le cumul, les numéros (NT_{A}, NT_{MS}) et l'identifiant (ID_{MS}),
- encapsule le résultat dans un deuxième cryptogramme K_{A,M}(M, K_{A,E}(M')) utilisant le système de clés K_{A,M} qu'elle partage avec le module de sécurité (MS),
- ajoute à ce deuxième cryptogramme, le message M,
- encapsule le résultat dans un troisième cryptogramme K_{S}(M,K_{A,M}(M,K_{A,E}(M')), en utilisant le système de clés K_{A,P},
- transmet ce troisième cryptogramme au point de service (P),
b) le point de service (P) décapsule le cryptogramme reçu à l'aide du système de clés K_{A,P}, récupère et vérifie le message M, et enregistre K_{A,M}(M,K_{A,E}(M')), le procédé étant répété si l'utilisation du service n'est pas terminée,
c) en fin d'utilisation du service le point de service (P) retransmet le dernier K_{A,M}(M,K_{A},_{E}(M')) au module de sécurité (MS),
d) le module de sécurité (MS) décapsule le cryptogramme reçu à l'aide du système de clés K_{A,M}, récupère le message (M) et transmet K_{A,E}(M') à l'émetteur,
e) l'émetteur (E) décapsule le cryptogramme reçu à l'aide du système de clés K_{A,E} et extrait le message (M') qui lui était destiné.

## Claims

1. Method of carrying out an electronic transaction across a communication network linking a plurality of entities, **characterized in that** it comprises the following operations:
a) a first entity formulates a first message bundling the data of the transaction and calculates a first cryptogram of this first message using a first system of keys that it shares with a last (n^{th}) entity; the first entity thereafter associates a second message with this first cryptogram and calculates a second cryptogram of the whole using a second system of keys that it shares with a penultimate (n-1)^{th} entity; and so on and so forth; the first entity associates an (n-1)^{th} message with the (n-2)^{th} cryptogram previously obtained and calculates an (n-1)^{th} cryptogram of the whole using an (n-1)^{th} system of keys that it shares with a second entity; the first entity transmits the last calculated cryptogram across the communication network,
b) the second entity receives the last cryptogram, uses the appropriate system of keys to extract from the (n-1)^{th} cryptogram the (n-1)^{th} message that it contains, and transmits the (n-2)^{th} remaining cryptogram to the third entity; and so on and so forth; the n^{th} entity receives the first cryptogram and uses the appropriate system of keys to extract the first message that it contains.

2. Method according to Claim 1, in which the communication network comprises only entities that share a key with a first entity, the transaction then being performed between the first entity, which is the source of the message and the last entity, which is the recipient of the message.

3. Method according to Claim 1, in which the communication network comprises a first group of entities consisting of a first entity and of (i-1) others each sharing a system of keys with the said first entity, and a second group of entities consisting of a first entity which is the last entity of the first group, namely the entity i, and of (n-i) others, the entity i sharing a system of keys with each of the (n-i) following entities, this method comprising two successive phases:
- a first phase in which the message formulated by the first entity of the first group is transmitted to the i^{th} entity of the first group in accordance with operations a) and b) of Claim 1,
- a second phase in which the message extracted by the first entity of the second group is transmitted to the last entity of the second group in accordance with operations a) and b) of Claim 1.

4. Method according to Claim 1, in which the communication network comprises a first group of entities consisting of a first entity and of (i-1) others each sharing a system of keys with the said first entity, a second group of entities consisting or a first entity, which is the last entity of the first group and (j-i+1) others each sharing a system of keys with the said first entity of the second group, a third group of entities consisting of a first entity which is the last entity of the second group and of (n-j) others, the (n-j+1) entities of this third group each sharing a system of keys with the first entity of the first group, this method being **characterized in that**:
- the first entity of the first group performs operations a) of Claim 1, with the systems of keys that it has in common with each of the other entities of the first and of the third group,
- the entities of the first group process the cryptograms that they receive in accordance with operations b) of Claim 1,
- the first entity of the second group performs operations a) of Claim 1 with the systems of keys that it has in common with each of the other entities of the second group,
- the entities of the second group process the cryptograms that they receive in accordance with operations b) of Claim 1,
- the entities of the third group decrypt the cryptograms that they receive in accordance with operations b) of Claim 1.

5. Method according to Claim 1, in which the first entity i of a group calculates a cryptogram of the messages intended for the other entities i+1, i+2,..., j of the group, without encapsulating them, each entity i+1, i+2,..., j receives and checks the message which is intended for it with the aid of its key system shared with i.

6. Method according to Claim 1, in which the electronic transaction is a payment, the entities consisting of cards (A), service points (P) able to receive the said cards (A), concentrators of service points equipped with a security module (MS) and linked to the service points and an issuer (E) in charge of issuing cards of electronic payment type and in charge of acquiring the electronic money, the communication network linking service points (P) to the concentrators and these concentrators to the issuer, each card (A) sharing a system of keys K_{A,M} with a security module (MS), each card A also sharing a system of keys K_{A,E} with the issuer (E), each card (A) sharing a system of keys K_{A,P} with a service point (P).

7. Method according to Claim 6, in which:
a) the card (A):
- calculates a message (M') intended for the issuer (E), this message comprising the aggregate of the amounts paid, the number (NT_{A}) of the transaction, the transaction number (NT_{MS}) of the security module (MS) to which the service point is linked, and the identifier (ID_{MS}) of this security module,
- calculates a first cryptogram K_{A,E}(M') of this message using the system of keys K_{A,E} that it shares with the issuer,
- adds to this first cryptogram a message (M) containing the amount of the transaction (m), the aggregate, the numbers (NTA, NTMS) and the identifier (IDMS)
- encapsulates the result in a second cryptogram K_{A,M}(M,KA,E(M')) using the system of keys K_{A,M} that it shares with the security module (MS),
- adds the message M to this second cryptogram,
- encapsulates the result in a third cryptogram K_{S}(M,K_{A,M}(M,K_{A,E} (M')), using the system of keys K_{A,P},
- transmits this third cryptogram to the service point (P),
b) the service point (P) decapsulates the cryptogram received with the aid of the system of keys K_{A,P}, retrieves and verifies the message M, and records K_{A,M}(M,K_{A,E}(M')), the method being repeated if the use of the service has not finished,
c) when the use of the service has ended the service point (P) retransmits the last K_{A,M}(M,K_{A,E}(M')) to the security module (MS),
d) the security module (MS) decapsulates the cryptogram received with the aid of the system of keys K_{A,M}, retrieves the message (M) and transmits K_{A,E}(M') to the issuer,
e) the issuer (E) decapsulates the received cryptogram with the aid of the system of keys K_{A,E} and extracts the message (M') which was intended for it.

## Patentansprüche

1. Verfahren zur Ausführung einer elektronischen Transaktion über ein Kommunikationsnetz, das mehrere Instanzen verbindet, **dadurch gekennzeichnet, dass** es folgende Abläufe umfasst:
a) eine erste Instanz bearbeitet eine erste Nachricht, welche die Daten der Transaktion zusammenfasst und ein erstes Kryptogramm dieser ersten Nachricht berechnet, indem ein erstes System von Schlüsseln, das sie mit einer letzten (n-ten) Instanz gemeinsam nutzt, verwendet wird; die erste Instanz ordnet dann diesem ersten Kryptogramm eine zweite Nachricht zu und berechnet ein zweites Kryptogramm der Menge, indem sie ein zweites System von Schlüsseln verwendet, das sie mit einer vorletzten (n-1)-ten Instanz gemeinsam nutzt, und so weiter; die erste Instanz ordnet dem zuvor erhaltenen (n-2)-ten Kryptogramm eine (n-1)-te Nachricht zu und berechnet ein (n-1)-tes Kryptogramm der Menge, indem sie ein (n-1)-tes System von Schlüsseln verwendet, das sie mit einer zweiten Instanz gemeinsam nutzt; die erste Instanz überträgt das zuletzt berechnete Kryptogramm über das Kommunikationsnetz,
b) die zweite Instanz empfängt dieses letzte Kryptogramm, verwendet das geeignete System von Schlüsseln, um aus dem (n-1)-ten Kryptogramm die (n-1)-te Nachricht, die es enthält, zu extrahieren und überträgt das restliche (n-2)-te Kryptogramm zur dritten Instanz, und so weiter; die n-te Instanz empfängt das erste Kryptogramm und verwendet das geeignete System von Schlüsseln, um die erste Nachricht, die es enthält, zu extrahieren.

2. Verfahren nach Anspruch 1, bei dem das Kommunikationsnetz nur Instanzen aufweist, die einen Schlüssel mit einer ersten Instanz gemeinsam nutzen, wobei die Transaktion dann zwischen der ersten Instanz, die der Ursprung der Nachricht ist, und der letzten Instanz, die der Empfänger der Nachricht ist, durchgeführt wird.

3. Verfahren nach Anspruch 1, bei dem das Kommunikationsnetz eine erste Gruppe von Instanzen aufweist, gebildet aus einer ersten Instanz und (i-1) anderen, die jeweils ein System von Schlüsseln mit der ersten Instanz gemeinsam nutzen, und einer zweite Gruppe von Instanzen, gebildet aus einer ersten Instanz, welche die letzte Instanz der ersten Gruppe ist, nämlich der Instanz i und (n-i) anderen, wobei die Instanz i ein System von Schlüsseln mit jeder der folgenden (n-i) Instanzen gemeinsam nutzt, wobei dieses Verfahren zwei aufeinander folgende Phasen umfasst:
- eine erste Phase, in welcher die durch die erste Instanz der ersten Gruppe bearbeitete Nachricht zur i-ten Instanz der ersten Gruppe gemäß den Abläufen a) und b) des Anspruchs 1 übertragen wird.
- eine zweite Phase, in welcher die durch die erste Instanz der zweiten Gruppe extrahierte Nachricht zur letzten Instanz der zweiten Gruppe gemäß den Abläufen a) und b) des Anspruchs 1 übertragen wird.

4. Verfahren nach Anspruch 1, bei dem das Kommunikationsnetz eine erste Gruppe von Instanzen aufweist, gebildet aus einer ersten Instanz und (i-1) anderen, die jeweils ein System von Schlüsseln mit der ersten Instanz gemeinsam nutzen, eine zweite Gruppe von Instanzen, gebildet aus einer ersten Instanz, welche die letzte Instanz der ersten Gruppe ist und (j-i+1) anderen, die jeweils ein System von Schlüsseln mit der ersten Instanz der zweiten Gruppe gemeinsam nutzen, eine dritte Gruppe von Instanzen, gebildet aus einer ersten Instanz, welche die letzte Instanz der zweiten Gruppe und von (n-j) anderen ist, wobei die (n-j+1) Instanzen dieser dritten Gruppe jeweils ein System von Schlüsseln mit der ersten Instanz der ersten Gruppe gemeinsam nutzen, wobei dieses Verfahren **dadurch gekennzeichnet ist, dass**:
- die erste Instanz der ersten Gruppe die Abläufe a) des Anspruchs 1 mit den Systemen von Schlüsseln, die sie gemeinsam mit jeder der anderen Instanzen der ersten und der dritten Gruppe hat, durchführt,
- die Instanzen der ersten Gruppe die Kryptogramme, die sie gemäß den Abläufen b) des Anspruchs 1 empfangen, verarbeiten,
- die erste Instanz der zweiten Gruppe die Abläufe a) des Anspruchs 1 mit den Systemen von Schlüsseln, die sie gemeinsam mit jeder der anderen Instanzen der zweiten Gruppe hat, durchführt,
- die Instanzen der zweiten Gruppe die Kryptogramme, die sie gemäß den Abläufen b) des Anspruchs 1 empfangen, verarbeiten,
- die Instanzen der dritten Gruppe die Kryptogramme, die sie empfangen, gemäß den Abläufen b) des Anspruchs 1, entschlüsseln.

5. Verfahren nach Anspruch 1, bei dem die erste Instanz i einer Gruppe ein Kryptogramm der Nachrichten, die für die anderen Instanzen i+1, i+2, ..., j der Gruppe bestimmt sind, berechnet, ohne sie einzukapseln, wobei jede Instanz i+1, i+2, ..., j die Nachricht, die für sie bestimmt ist mit Hilfe ihres gemeinsam mit i genutzten Systems von Schlüsseln empfängt und kontrolliert.

6. Verfahren nach Anspruch 1, bei dem die elektronische Transaktion eine Zahlung ist, wobei die Instanzen dargestellt sind durch Karten (A), Dienstpunkte (P), welche die Karten (A) empfangen können, Dienstpunktkonzentratoren, die mit einem Sicherheitsmodul (MS) ausgerüstet sind und mit den Dienstpunkten verbunden sind und einem Sender (E), der Karten von der Art elektronische Zahlung senden soll und das elektronische Geld sammeln soll, das Kommunikationsnetz, das Dienstpunkte (P) mit Konzentratoren und diese Konzentratoren mit dem Sender verbindet, wobei jede Karte (A) ein System von Schlüsseln K_{A,M} mit einem Sicherheitsmodul (MS) gemeinsam nutzt, wobei jede Karte A auch mit dem Sender (E) ein System von Schlüsseln K_{A,E} gemeinsam nutzt, wobei jede Karte (A) mit einem Dienstpunkt (P) ein System von Schlüsseln K_{A,P} gemeinsam nutzt.

7. Verfahren nach Anspruch 6, bei dem:
a) die Karte (A):
- eine Nachricht (M') berechnet, die für den Sender (E) bestimmt ist, wobei diese Nachricht die Summierung der bezahlten Beträge, die Nummer (NT_{A}) der Transaktion, die Transaktionsnummer (NT_{MS}) des Sicherheitsmoduls (MS), mit welchem der Dienstpunkt verbunden ist, und die Kennung (ID_{MS}) dieses Sicherheitsmoduls aufweist.
- ein erstes Kryptogramm K_{A,E}(M') dieser Nachricht berechnet, indem sie das System von Schlüsseln K_{A,E}, das sie gemeinsam mit dem Sender nutzt, verwendet,
- diesem ersten Kryptogramm eine Nachricht (M) hinzufügt, die den Betrag der Transaktion (m), die Summierung, die Nummern ( NT_{A}, NT_{MS}) und die Kennung (ID_{MS})enthält,
- das Ergebnis in einem zweiten Kryptogramm K_{A,M}(M, K_{A,E}(M')) anhand des Systems von Schlüsseln K_{A,M}, das sie gemeinsam mit dem Sicherheitsmodul (MS) nutzt, einkapselt,
- diesem zweiten Kryptogramm die Nachricht M hinzufügt,
- das Ergebnis in einem dritten Kryptogramm K_{S}(M, K_{A,M} (M, K_{A,E} (M')) anhand des Systems von Schlüsseln K_{A,P} einkapselt,
- dieses dritte Kryptogramm zum Dienstpunkt (P) überträgt,
b) der Dienstpunkt (P) das mit Hilfe des Systems von Schlüsseln K_{A,P} empfangene Kryptogramm entkapselt, die Nachricht M wieder erlangt und überprüft und K_{A,M}(M, K_{A,E}(M')) speichert, wobei das Verfahren wiederholt wird, wenn die Benutzung des Dienstes nicht beendet ist,
c) am Ende der Benutzung des Dienstes der Dienstpunkt (P) wieder das letzte K_{A,M}(M, K_{A,E}(M')) zum Sicherheitsmodul (MS) überträgt.
d) das Sicherheitsmodul (MS) das mit Hilfe des Systems von Schlüsseln K_{A,M} empfangene Kryptogramm entkapselt, die Nachricht (M) wieder erlangt und K_{A,E}(M') zum Sender überträgt,
e) der Sender (E) das mit Hilfe des Systems von Schlüsseln K_{A,E} empfangene Kryptogramm entkapselt und die Nachricht (M'), die für ihn bestimmt war, extrahiert.
